# EUROPEAN PATENT SPECIFICATION

(11) **EP 2 059 114 B1**
(45) Date of publication and mention of the grant of the patent: **23.07.2014**
(21) Application number: 06814253.8
(22) Date of filing: 08.09.2006
(51) Int. Cl.: A01G 9/00, A01G 13/02, A47G 7/02, E01C 9/00

(54) **STACKABLE STRUCTURAL CELL HAVING IMPROVED SUPPORT CHARACTERISTICS**
STAPELBARE STRUKTURELLE ZELLE MIT VERBESSERTEN STÜTZEIGENSCHAFTEN
CELLULE STRUCTURELLE EMPILABLE PRÉSENTANT DES CARACTÉRISTIQUES DE SUPPORT AMELIORÉES

(43) Date of publication of application: 20.05.2009
(73) Proprietor: DeepRoot Green Infrastructure, LLC, San Francisco, CA 94111 (US)
(72) Inventor: RAY, Charles, Julian, San Francisco, CA 94111 (US); RAY, Charles, Graham, San Francisco, CA 94117 (US); COGGER, John, Joseph, San Francisco, CA 94117 (US)
(74) Representative: Freeman, Jacqueline Carol
(86) International application number: PCT/US2006/034782
(87) International publication number: WO 2008/030238

(56) References cited:
- US-A- 5 379 566
- US-A1- 2005 155 285
- US-B2- 7 080 480

## Description

### BRIEF DESCRIPTION OF THE INVENTION

This invention relates generally to structural support devices. More specifically, this invention relates to stackable structural cells for supporting hardscape and allowing tree root growth underneath the hardscape.

### BACKGROUND OF THE INVENTION

The design of many modem dense urban landscapes often calls for the placement of trees within paved-over areas or areas covered by other hardscapes. In particular, such designs often call for trees to be placed in close proximity to roads, sidewalks, and other load bearing pathways. However, the weight of these pathways and the loads they carry often compact the soil underneath to such an extent that it is often difficult for tree roots to sufficiently penetrate the soil. As a result, trees planted in close proximity to these hardscapes may not survive or grow to the full extent envisioned.

Various solutions to this problem have been proposed. For example, structural cell systems such as those disclosed in United States Patent No. 7,080,480, have been designed to facilitate the growth of trees near hardscapes, while allowing for soil aeration, water drainage, and the like. It is, however, desirable to improve various aspects of such cells. Accordingly, continuing efforts exist to make such structural cells support hardscapes better, while improving the manufacturability and other characteristics of such cells.

US 2005/0155285 discloses a cell system sized to accept tree roots with one or more permeable barriers around the cells with a way for water to flow into and out of the cells.

According to the present invention there is provided a structural cell for supporting hardscape and allowing tree root growth underneath the hardscape, comprising: a cell structure having a bottom portion and a plurality of support members, the cell structure having a vertical direction generally perpendicular to the bottom portion and lateral directions generally within the bottom portion; wherein outer edges of the bottom portion and the plurality of support members define a volume, the cell structure being configured to support the hardscape while approximately 90% or more of the cell volume comprises free volume to allow generally unimpeded growth of tree roots through at least approximately ninety percent of the volume; wherein the cell structure is stackable upon another one of the cell structure so that the support members of the stacked cell structures provide the support of the hardscape, and so that the stacked cell structures are substantially coupled in their vertical directions and substantially uncoupled in their lateral directions; and wherein the plurality of support members further includes a first set of support members having a first support member orientation, and a second set of support members having a second support member orientation that is rotated approximately 45 degrees from the first support member orientation.

### SUMMARY OF THE INVENTION

The invention can be implemented in numerous ways. Accordingly, various embodiments of the invention are discussed below.

In one embodiment, a structural cell for supporting hardscape and allowing tree root growth underneath the hardscape comprises a cell structure having a bottom portion and a plurality of support members. The cell structure has a vertical direction generally perpendicular to the bottom portion and lateral directions generally within the bottom portion. Outer edges of the bottom portion and the plurality of support members define a volume, where the cell structure is configured to support the hardscape while allowing generally unimpeded growth of tree roots through at least approximately ninety percent of the volume. Also, the cell structure is stackable upon another one of the cell structure so that the support members of the stacked cell structures provide the support of the hardscape, and so that the stacked cell structures are substantially coupled in their vertical directions and substantially uncoupled in their lateral directions.

In another embodiment, a structural cell for supporting hardscape and allowing generally unimpeded tree root growth underneath the hardscape comprises a base having a first side and a second side, and a plurality of support members extending from the base. Each support member of the plurality of support members has a cross-sectional shape that is a generally quadrifoil shape, the plurality of support members configured to provide structural support of the hardscape. Ones of the support members extending from the first side of the base have a first orientation of their generally quadrifoil shapes, and ones of the support members extending from the second side of the base have a second orientation of their generally quadrifoil shapes.

In yet another embodiment, a deck for a structural cell, the structural cell allowing tree root growth underneath a hardscape and having a plurality of support members configured to structurally support the hardscape, comprises a rigid body having recesses located so as to contact the support members when the body is seated upon the structural cell. The rigid body is configured to prevent compaction of soil within the structural cell when the body is seated upon the structural cell, so as to facilitate the growth of the tree roots underneath the seated body and within the structural cell.

Other aspects and advantages of the invention will become apparent from the following detailed description taken in conjunction with the accompanying drawings which illustrate, by way of example, the principles of the invention.

### BRIEF DESCRIPTION OF THE DRAWINGS

For a better understanding of the invention, reference should be made to the following detailed description taken in conjunction with the accompanying drawings, in which:
FIG. 1 illustrates an exemplary structural cell system of the invention.
FIG. 2 illustrates an isometric detail view of a structural cell of the invention, including a frame portion and a deck portion.
FIG. 3 is an isometric view illustrating further details of the frame portion of FIG. 2.
FIGS. 4A-4E are various views of the frame portion of FIGS. 2-3, illustrating further details of various features in accordance with the invention.
FIGS. 5A-5F are various views of the deck portion of FIGS. 2-3, illustrating further details of various features in accordance with the invention.
FIG. 6 illustrates an isometric detail view of a structural cell of the invention, including a frame portion having detachable support members.
FIGS. 7A-7G illustrate various views of the frame portion of FIG. 6, and further details thereof.
FIGS. 8A-8B illustrate a side view and a cross-sectional side view, respectively, of detachable support members for use with the frame portion of FIG. 6.
FIGS. 9A-9E illustrate various views of the detachable support members of FIGS. 8A-8B, and further details thereof.

Like reference numerals refer to corresponding parts throughout the drawings.

### DETAILED DESCRIPTION OF EMBODIMENTS OF THE INVENTION

In one aspect, the invention relates to structural cells that are placed beneath hardscape. The cells are strong enough to structurally support the hardscape, effectively bearing its weight along with the weight of any load it carries. Furthermore, even though the cells are strong enough to offer structural support of a hardscape, the cells are also designed to be relatively lightweight, stackable, and open, allowing approximately 90% of their volume, or more, to be free volume that can contain uncompacted soil, tree roots, utilities, and the like. The cells achieve these attributes through a design that includes a flexible bottom frame, and support members. These support members have a cross-sectional shape that allows for axial rigidity while also preventing any interlocking between support members when cells are stacked. In one embodiment, this cross-sectional shape is a generally quadrifoil shape. In addition, each cell includes support members whose quadrifoil shapes are oriented 45 degrees apart from each other, so that the support members do not interlock when these cells are stacked.

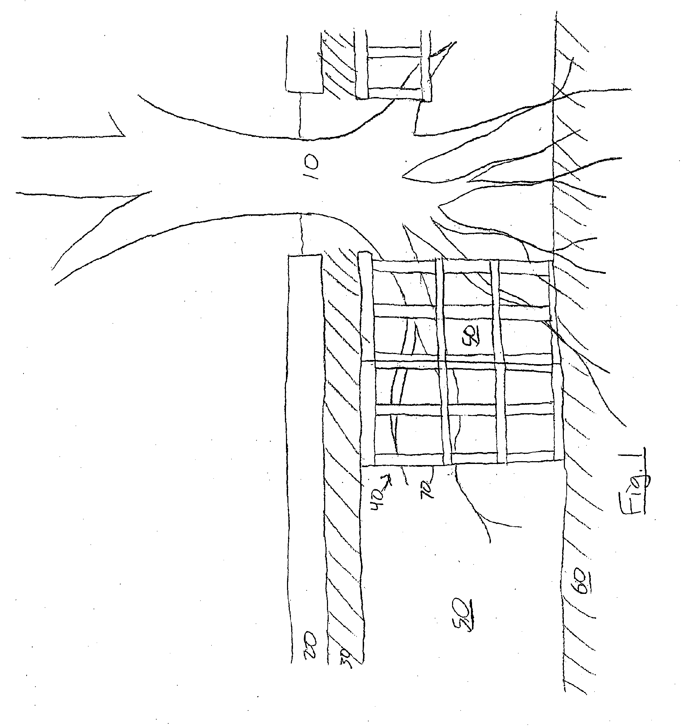

FIG. 1 illustrates an exemplary application of the structural cells of the invention. Here, a tree 10 grows its roots in the soil 50 underneath a hardscape 20 and layer of aggregate 30. Because the tree 10 requires relatively uncompacted soil for proper water drainage and root growth, three layers of structural cells 40 are stacked between the hardscape 20 and aggregate 30 above, and foundation 60 below. The cells 40 are sufficiently rigid that they structurally support the weight of the hardscape 20, aggregate 30, and any loads above (e.g., cars, pedestrians, etc.), transferring it to the foundation 60 rather than the soil 50. This maintains the soil 50 within the structural cells 40 in a relatively uncompacted state, allowing roots from the tree 10 to grow therethrough as shown. In addition, the rigidity of the cells 40 allows a relatively small number of support members to bear structural loads. In this manner, the cells 40 maintain a large amount of continuous open volume within, free of excessive numbers of support members that take up space and prevent large tree roots from growing therethrough.

In some embodiments, the structural cells 40 are configured to satisfy a number of constraints. For example, the cells 40 should be composed of a material capable of withstanding an underground environment that can contain water. This material should also be of sufficient strength to support a hardscape 20, aggregate 30, and their associated loads. In some embodiments, it is preferable for the cells 40 to support loads in accordance with known AASHTO (American Association of State Highway and Transportation Officials) H20 load requirements. In addition, the cells 40 are to be configured to be stackable upon each other, as shown in FIG. 1, without interlocking. That is, when cells 40 are stacked upon each other, the stacked support members 70 should not interlock, as compressive forces could cause the lower support members 70 to telescope excessively into the upper support members 70 that are stacked upon them, allowing the stacked cells 40, and thus the overlying hardscape 20, to sink. Finally, the cells 40 should preferably be designed to be injection-moldable.

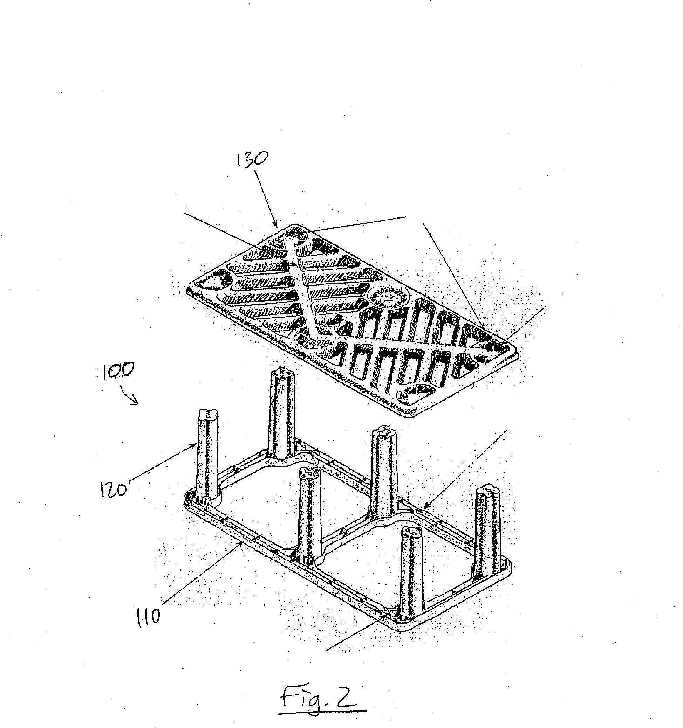

These constraints are satisfied by the structural cell design of FIG. 2, which illustrates further details of the structural cells 40 of FIG. 1. In FIG. 2, the structural cell has a frame portion 100 that has a lower frame 110, or bottom portion. A number of support members 120 protrude from the lower frame 110. As will be discussed further below, the support members 120 can be integrally formed with the lower frame 110 and can also be designed to be detachable. The invention includes both configurations. A deck 130, or upper portion, is placeable upon the support members 120 as shown. When cells 40 are stacked, such as in FIG. 1, the deck 130 is typically placed upon the uppermost cells 40, directly beneath the layer of aggregate 30.

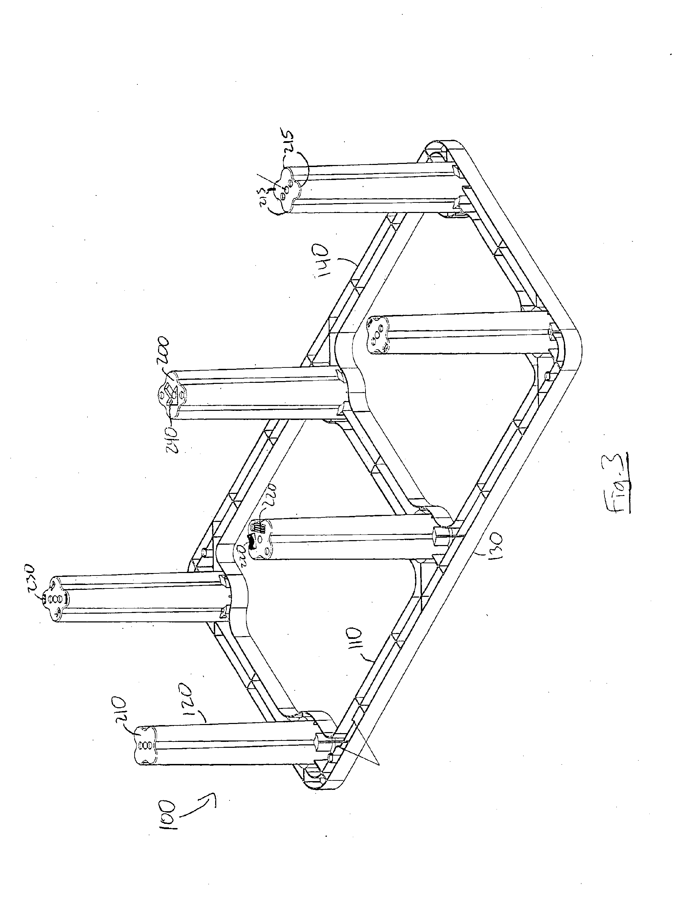

Attention now turns to a more detailed discussion of the cell 100. FIG. 3 is an isometric view illustrating further details of the frame portion 100 of FIG. 2. In the embodiment shown, the lower frame 110 is generally rectangular, with three support members 120 along each of its longer sides 130, 140. The lower frame 110 is also relatively thin and therefore pliable, so as to conform to irregularities in the foundation 60. It can be observed that the cell 100 leaves the volume within largely unobstructed, i.e., free of excessive numbers of support members, allowing large roots and other large-sized objects to be placed within. This yields significant advantages, as cells 100 not only contain relatively large amounts of open space, but this open space is easily accessible for penetration by roots or other objects. Thus, not only is space available for roots and other objects, but they can grow into, or be placed within, the cells in a relatively unimpeded fashion. Cells 100 can thus be used in connection with even very large trees, with large root systems, as the cells 100 offer very little in the way of obstructions to impede the growth of even large roots therethrough. These cells 100 can also be easily filled with soil, in contrast to cells with excessive numbers of support members that inhibit the placement of soil or other objects within.

The support members 120 have top surfaces 200, 210 that have a shape generally referred to as a quadrifoil or four-leaved shape, having four distinct, rounded "lobes" 215. It can be seen that the support members 120 along side 130 of the lower frame 110 have lobes 215 oriented at 45° from the lobes 215 of the support members 120 along side 140. That is, the lobes 215 along side 130 are rotated 45° relative to the lobes 215 along the opposite side 140. In this manner, one of ordinary skill in the art will observe that two cells 100, when stacked so that side 140 of the upper cell 100 is aligned above side 130 of the lower cell 100 (i.e., the upper cell is rotated 180° relative to the lower cell), the support members 120 of the upper cell will have their top surfaces 200 rotated 45° relative to the top surfaces 210 of the lower support members 120. That is, the upper support members 120 will rest upon the lower support members 120 upon which they are stacked, but the quadrifoil shapes of the upper support members 120 will be rotated 45° relative to the quadrifoil shapes of the lower support members 120. This relative rotation prevents the stacked support members 120 from interlocking, or "smashing together," thus reducing their overall height and leading to sagging of the overlying hardscape 20. The rounded lobes 215 also do not have any sharp edges or corners, preventing significant stress concentrations.

In addition to their orientations, the support members 120 include other beneficial features. For instance, supports 220 connect to axial members embedded within the deck 130 (to be discussed further below), allowing the deck 130 to assist in preventing deformation of the support members 120. Features such as slots 230 act as locating features, allowing for cells 100 to support snap-fit connections that secure stacked cells in place. In this manner, hooks can be fabricated on the undersides of the support members 120, corresponding to the slots 230. For example, four slots 230 are shown on the uppermost support member 120 of FIG. 3, and two slots 230 are shown on the lowermost support member 120. In order to ensure that cells 100 can only be stacked upon each other in 180° opposite directions, the lowermost support member 120 can have four hooks (not shown) fabricated so as to protrude from its underside, and snap into the four slots 230 of the uppermost support member 120. Similarly, the uppermost support member 120 can have two hooks (not shown) configured to snap into the two slots 230 of the lowermost support member 120. This ensures that stacked cells 100 must be rotated 180° relative to each other if they are to properly snap together.

Another feature shown in FIG. 3 is a visual indicator 240 (shown here as an arrow) that further highlights the desired orientation of the cells 100. In the case of the arrow shown, if alternating layers of cells 100 are to be rotated 180° relative to each other, it can be seen that successive layers should have arrows pointing in opposite directions. The visual indicator 240 thus provides a quick and convenient way to determine whether cells 100 have been stacked properly upon each other.

It should be noted that, while a generally quadrifoil shape such as the one shown is often preferable, the invention is not limited to this shape. Rather, the invention encompasses any cross-sectional shape of the support member 120 that allows cells 100 to be stackable upon each other without significant reduction in the overall height of the stacked cells 100. It also follows that the invention encompasses cells 100 that can be stacked in other orientations besides 180°-opposing layers.

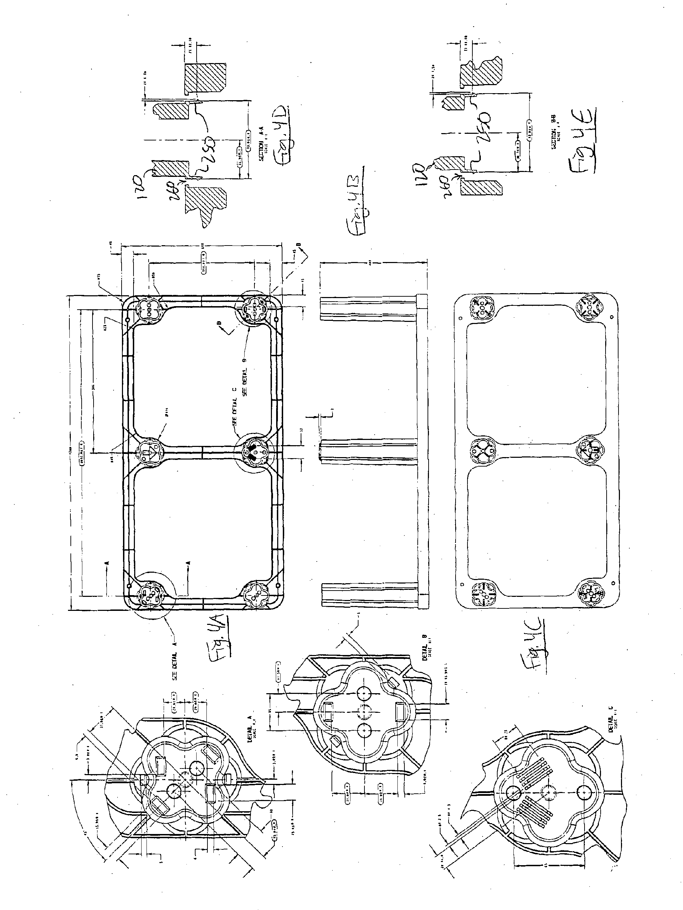

FIGS. 4A-4E are various views of the frame portion of FIGS. 2-3, illustrating further details of the cells 100. In particular, FIGS. 4D-4E illustrate cross-sectional views of two of the support members 120, further describing their snap-fit connections. Hooks 250 protrude from the undersides of the support members 120, where they can snap into corresponding slots 230, securing the cells 100 when stacked. These connections can also include holes 260 for prying the hooks 250 out of their slots 230, thus rendering the connections removable and allowing cells 100 to be unstacked, or disassembled, if desired. It should be observed that, while the snap-fit connections can connect stacked cells together, they are of insufficient size and strength to offer significant structural support. That is, even though the support members 120 of stacked cells 100 rest atop each other and are thus substantially coupled with respect to vertical forces, these same cells 100 remain substantially uncoupled laterally (i.e., directions within the plane of the lower frame 110). In operation, sufficient lateral stability is typically offered by the surrounding soil 50 and frictional forces from the aggregate 30 and foundation 60, rather than by the snap-fit connections. It can be seen that the lateral decoupling of stacked cells 100 allows these cells 100 to more effectively transfer their structural loads down to the foundation 60.

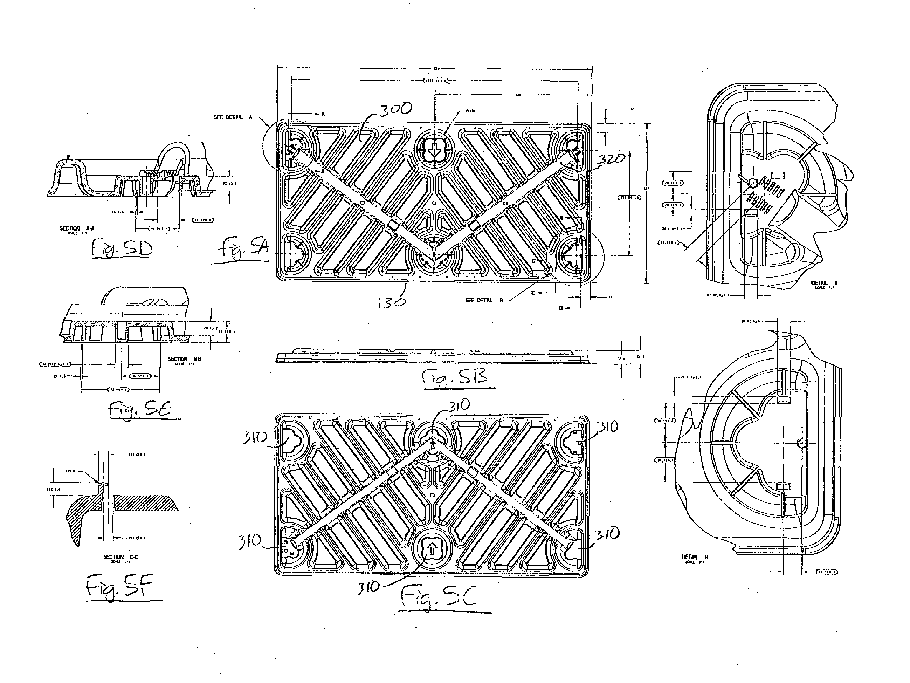

Details of the cell 100 having been explained, attention now turns to a more detailed explanation of the deck 130. FIGS. 5A-5F are various views of the deck 130, illustrating further details of various features in accordance with the invention. As explained previously, the deck 130 sits atop the uppermost layer of cells 100, preventing overlying material from pressing into the cells 100 and excessively compacting the soil 50 within. In one embodiment, the deck 130 includes recesses 310 that correspond to the support members 120. The recesses 310 are positioned so as to seat upon the support members 120 when the deck 130 is placed atop a cell 100. In known fashion, the recesses 310 and/or support members 120 can include a number of attachment devices, such as the snap-fit mechanisms described above, to more securely fasten the deck 130 atop the cell 100. The deck 130 also includes a number of depressions 300 and channels 320. The channels 320 are each configured to hold an axial resistance member (not shown), which is fastened upon the supports 220 and between the top surfaces 200 of two (or, in other embodiments, more) support members 120 in order to prevent deformation of the support members 120 along the axial resistance member. The axial members thus help prevent phenomena such as creep, or time-dependent defonnation, of the support members 120. The axial members can be made of any material that is both compatible with the material(s) of the cell 100, deck 130 and the underground environment in which they are placed, and capable of sufficiently preventing deformation of the support members 120. For example, the axial members can be fabricated as a galvanized steel tube.

In operation, a geotextile layer is typically placed upon the deck 130, and the aggregate 30 and hardscape 20 are poured upon the geotextile layer. The weight of the aggregate 30 and hardscape 20 then acts to push the geotextile layer partially into the depressions 300. This acts to secure the deck 130 and cells 100 against any lateral movement, adding to the structural stability of the cells 100. Stability is further aided by the soil 50, which also supports the cells 100 against any lateral movement.

It should be noted that the invention encompasses cells 100 and lids 130 that are fabricated from any material(s) that satisfy the constraints listed above, i.e., that are sufficiently strong, yet can tolerate an underground environment and can be injection molded. For example, it is often preferable to fabricate the cells 100 and deck 130 of polypropylene that is at least 30% glass-filled. One of ordinary skill in the art will realize that the use of 30% glass-filled polypropylene allows for the design of cells 100 that can withstand H20 loading while maintaining 90% of its volume open for tree root growth within, as shown.

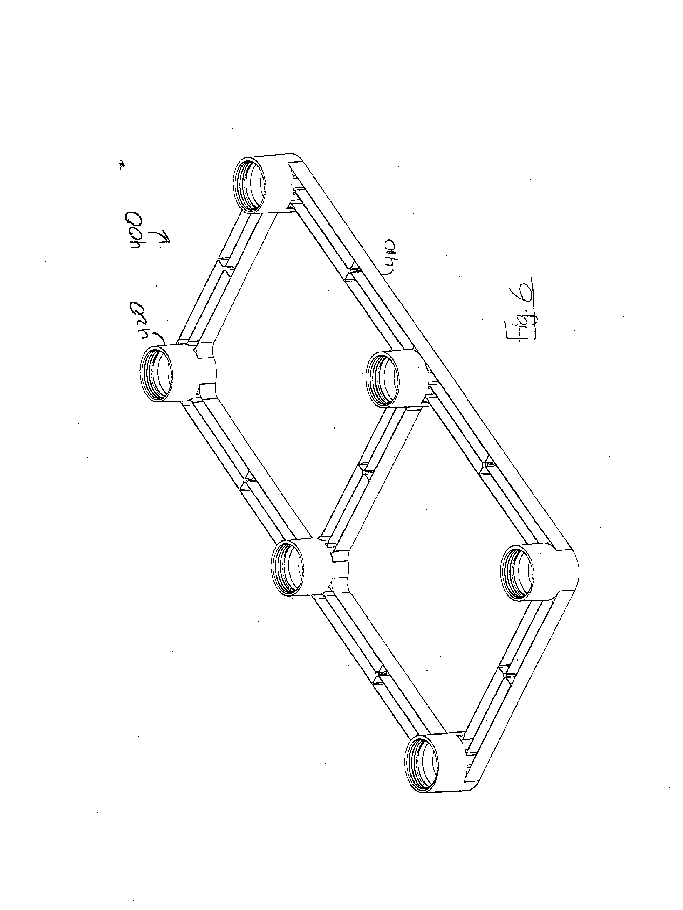

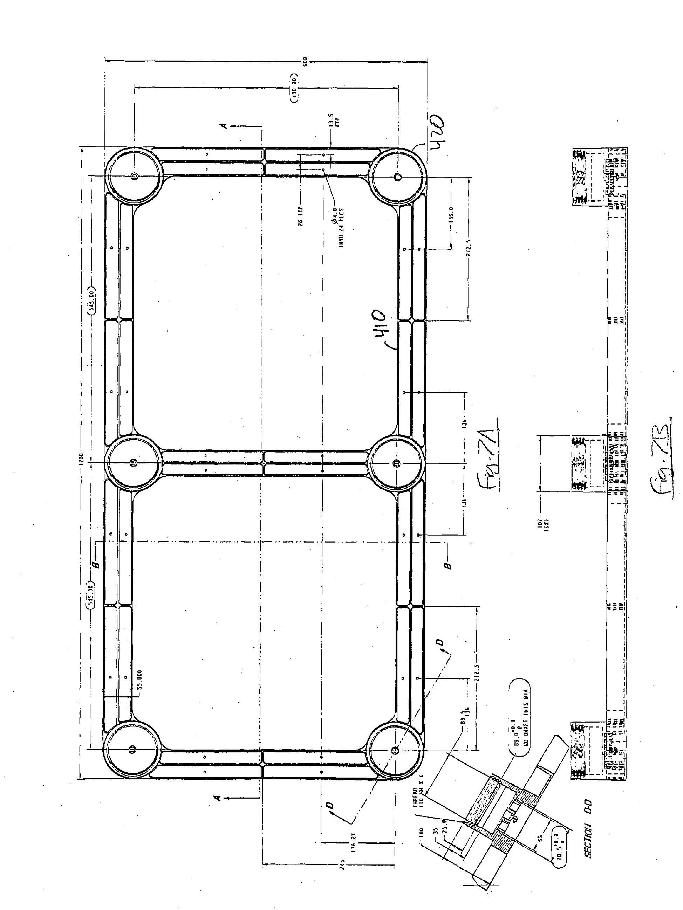

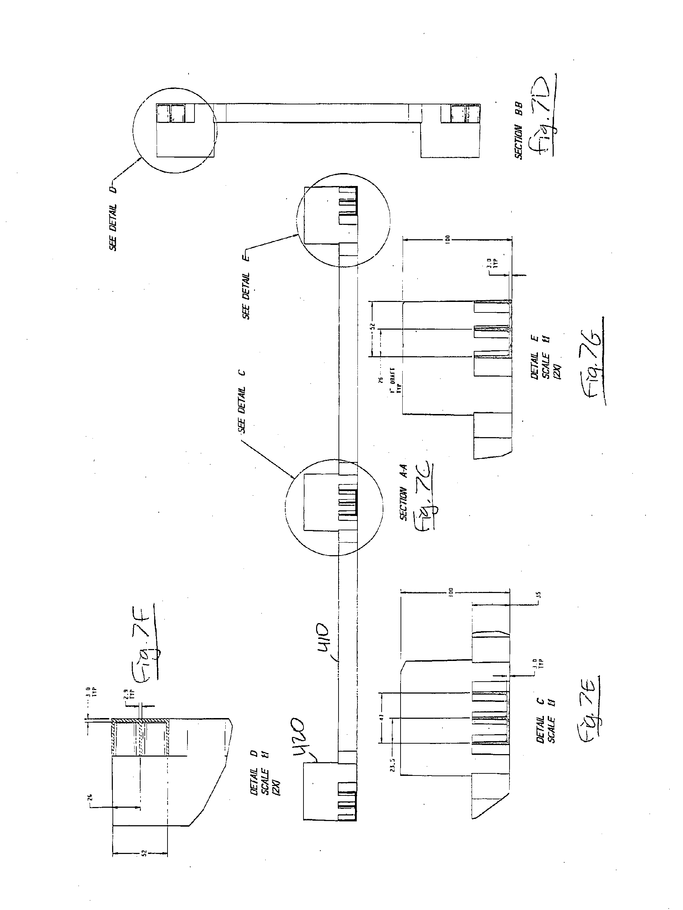

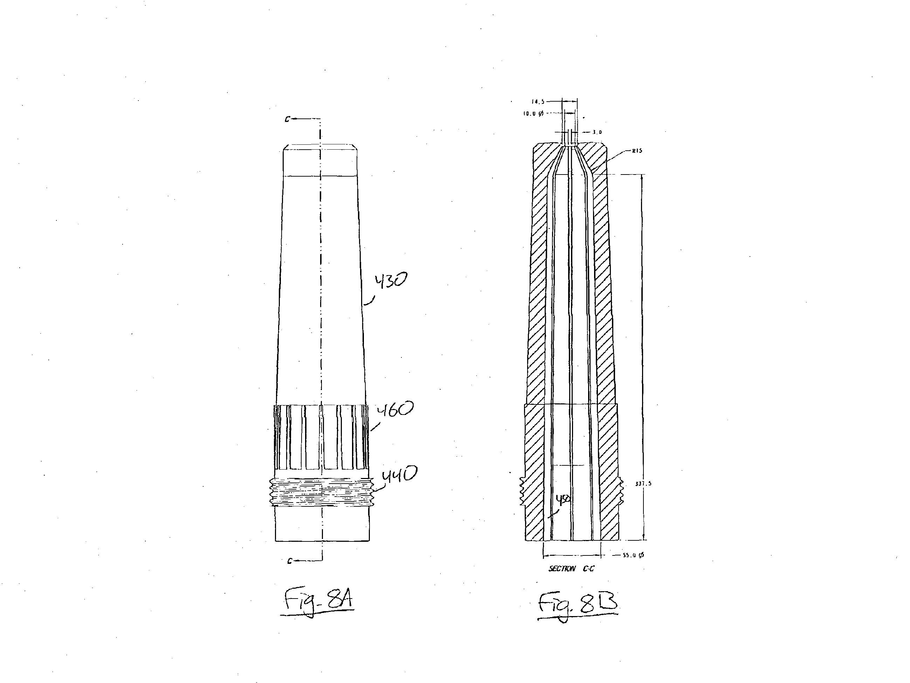

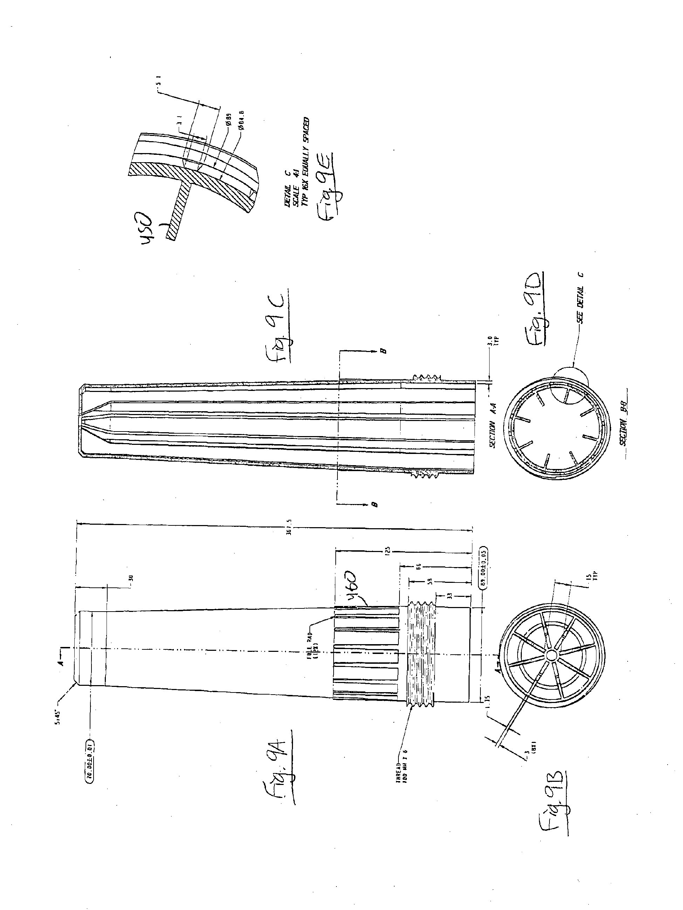

As described above, the support members 120 can be integrally formed with the lower frame 110, and can also be detachable from the lower frame 110. FIGS. 6 and 7A-7G illustrate the latter concept. Here, the lower frame 400 has a body 410 having receptacles 420 designed to support detachable support members. The invention encompasses any method of attaching/detaching such support members, although for ease of illustration the receptacles 420 are shown here as being threaded. The corresponding support members are illustrated in FIGS. 8A-8B and 9A-9E. Here, the support members 430 include threads 440 for screw-type attachment to the receptacles 420, and a grip area 460 for easy gripping during attachment/detachment. Ribs 450 can be added to increase the strength of the support members 430, if desired. The detachable support members 430 confer certain advantages, such as space savings during shipping. Also, the number of threads 440 can be chosen for sufficient strength in attachment, while requiring a minimal number of turns so as to minimize assembly time/effort. As can be seen from FIGS. 8A-8B, this number can be chosen as approximately four turns, although the invention certainly contemplates any other number.

The foregoing description, for purposes of explanation, used specific nomenclature to provide a thorough understanding of the invention. However, it will be apparent to one skilled in the art that the specific details are not required in order to practice the invention. Thus, the foregoing descriptions of specific embodiments of the present invention are presented for purposes of illustration and description. They are not intended to be exhaustive or to limit the invention to the precise forms disclosed. Many modifications and variations are possible in view of the above teachings. For example, the support members 130 can be of any non-interlocking design, even though a generally quadrifoil shape is often desirable. Similarly, the support members can be designed to be detachable, or integral with the lower frame 110. The embodiments were chosen and described in order to best explain the principles of the invention and its practical applications, to thereby enable others skilled in the art to best utilize the invention and various embodiments with various modifications as are suited to the particular use contemplated.

## Claims

1. A structural cell (40) for supporting hardscape (20) and allowing tree root growth underneath the hardscape (20), comprising:
a cell structure (100) having a bottom portion (110) and a plurality of support members (120), the cell structure having a vertical direction generally perpendicular to the bottom portion (110) and lateral directions generally within the bottom portion (110);
wherein outer edges of the bottom portion (110) and the plurality of support members (120) define a volume, the cell structure being configured to support the hardscape (20) while approximately 90% or more of the volume comprises free volume to allow generally unimpeded growth of tree roots therethrough; wherein the cell structure (100) is stackable upon another one of the cell structure (100) so that the support members (120) of the stacked cell structures (100) provide the support of the hardscape (20), and so that the stacked cell structures are substantially coupled in their vertical directions and substantially uncoupled in their lateral directions; and
wherein the plurality of support members (120) further includes a first set of support members (120) having a first support member orientation, and a second set of support members having a second support member orientation that is rotated approximately 45 degrees from the first support member orientation.

2. The structural cell (40) of claim 1 wherein the cell structure (100) is configured to support a load of at least 15 psi (103kNm⁻²).

3. The structural cell (40) of claim 1 wherein the cell structure is capable of being oriented in orientations about its vertical direction, and wherein the cell structure (100) is configured to be stacked upon another one of the cell structures (100) in a generally opposite orientation from the orientation of the another one of the cell structures (100).

4. The structural cell (40) of claim 3 wherein each support member (120) of the plurality of support members (120) has a cross-sectional shape that is a generally quadrifoil shape configured to prevent interlocking of the generally oppositely oriented stacked cell structures (100).

5. The structural cell (40) of claim 1 wherein each support member (120) of the plurality of support members (120) is formed integrally with the bottom portion (110).

6. The structural cell (40) of claim 1 wherein each support member (120) of the plurality of support members (120) is configured to be removably affixed to the bottom portion (110).

7. The structural cell (40) of claim 1 further comprising an upper portion configured for attachment to the support members (120) generally opposite to the bottom portion (110).

8. The structural cell (40) of claim 7 wherein the upper portion further comprises at least one resistance member configured to be coupled between at least two of the support members (120), the resistance member further configured to reduce a deformation of the at least two support members (120) in at least one of the lateral directions.

9. The structural cell (40) of claim 1 wherein the cell structure (100) is a polypropylene resin that is at least 30% glass-filled.

10. The structural cell (40) of claim 1 wherein the cell structure (100) is further configured to support the hardscape (20) while allowing placement of utilities within at least approximately ninety percent of its volume.

11. A structural cell (40) according to claim 4, comprising:
a base having a first side and a second side; wherein the plurality of support members (120) extend from the base; and
wherein ones of the support members (120) extending from the first side of the base have a first orientation of their generally quadrifoil shapes, and ones of the support members (120) extending from the second side of the base have a second orientation of their generally quadrifoil shapes.

12. The structural cell (40) of claim 11 wherein:
the base and the plurality of support members (120) collectively occupy a first volume;
the base and the plurality of support members (120) collectively outline a second volume; and
a ratio of the second volume to the first volume is at least approximately 9:1, so as to facilitate generally unimpeded growth of the tree roots and placement of utilities within the second volume.

13. The structural cell (40) of claim 12 wherein the first and second orientations are further configured to prevent interlocking of the structural cell (40) with another one of the structural cell when the structural cell (40) is stacked upon the another one of the structural cell.

14. The structural cell (40) of claim 11 wherein each support member (120) of the plurality of support members (120) is formed integrally with the base.

15. The structural cell (40) of claim 11 wherein each support member (120) of the plurality of support members (120) is configured to be removably affixed to the base.

16. The structural cell (40) of claim 11 further comprising a deck configured for attachment to the plurality of support members (120) generally opposite to the base.

17. The structural cell (40) of claim 16 wherein the deck further comprises at least one resistance member configured to be coupled between at least two of the support members (120), the resistance member further configured to reduce a deformation of the at least two support members (120) along the resistance member.

18. The structural cell (40) of claim 1 further configured for placement under a geotextile fabric supporting aggregate (30); and comprising a plurality of depressions (300) configured to receive the geotextile fabric and the aggregate (30), so as to facilitate structural support of the hardscape (20) by the support members (120).

## Patentansprüche

1. Strukturzelle (40) zum Tragen von Landschaftsbauprodukten (20) und zum Zulassen von Baumwurzelwachstum unter den Landschaftsbauprodukten (20), die Folgendes umfasst:
eine Zellstruktur (100) mit einem unteren Teil (110) und mehreren Stützelementen (120), wobei die Zellstruktur eine vertikale Richtung allgemein lotrecht zu dem unteren Teil (110) und laterale Richtungen allgemein innerhalb des unteren Teils (110) hat;
wobei äußere Ränder des unteren Teils (110) und die mehreren Stützelemente (120) ein Volumen definieren, wobei die Zellstruktur zum Tragen der Landschaftsbauprodukte (20) konfiguriert ist, während etwa 90 % oder mehr des Volumens freies Volumen beinhalten, das allgemein unbehindertes Wachstum von Baumwurzeln dadurch zulässt; wobei die Zellstruktur (100) auf eine andere der Zellstrukturen (100) gestapelt werden kann, so dass die Stützelemente (120) der gestapelten Zellstrukturen (100) die Landschaftsbauprodukte (20) tragen und so dass die gestapelten Zellstrukturen in ihren vertikalen Richtungen im Wesentlichen verbunden und in ihren lateralen Richtungen im Wesentlichen unverbunden sind; und
wobei die mehreren Stützelemente (120) ferner einen ersten Satz von Stützelementen (120) mit einer ersten Stützelementeorientierung und einen zweiten Satz von Stützelementen mit einer zweiten Stützelementeorientierung beinhalten, die um etwa 45 Grad von der ersten Stützelementeorientierung gedreht ist.

2. Strukturzelle (40) nach Anspruch 1, wobei die Zellstruktur (100) zum Tragen einer Last von wenigstens 15 psi (103 kNm⁻²) konfiguriert ist.

3. Strukturzelle (40) nach Anspruch 1, wobei die Zellstruktur in Orientierungen um ihre vertikale Richtung orientiert werden kann und wobei die Zellstruktur (100) so konfiguriert ist, dass sie auf eine andere der Zellstrukturen (100) in einer allgemein entgegengesetzten Orientierung von der Orientierung der anderen der Zellstrukturen (100) gestapelt werden kann.

4. Strukturzelle (40) nach Anspruch 3, wobei jedes Stützelement (120) der mehreren Stützelemente (120) eine Querschnittsform hat, die allgemein eine Vierpassgestalt hat, die zum Verhindern eines Verriegelns der allgemein entgegengesetzt orientierten gestapelten Zellstrukturen (100) konfiguriert ist.

5. Strukturzelle (40) nach Anspruch 1, wobei jedes Stützelement (120) der mehreren Stützelemente (120) einstückig mit dem unteren Abschnitt (110) ausgebildet ist.

6. Strukturzelle (40) nach Anspruch 1, wobei jedes Stützelement (120) der mehreren Stützelemente (120) so konfiguriert ist, dass es entfernbar am unteren Teil (110) befestigt werden kann.

7. Strukturzelle (40) nach Anspruch 1, die ferner einen oberen Teil umfasst, der zum Anbringen an den Stützelementen (120) allgemein gegenüber dem unteren Teil (110) konfiguriert ist.

8. Strukturzelle (40) nach Anspruch 7, wobei der obere Teil ferner wenigstens ein Widerstandselement umfasst, das zum Verbinden zwischen wenigstens zwei der Stützelemente (120) konfiguriert ist, wobei das Widerstandselement ferner zum Reduzieren einer Verformung der wenigstens zwei Stützelemente (120) in wenigstens einer der lateralen Richtungen konfiguriert ist.

9. Strukturzelle (40) nach Anspruch 1, wobei die Zellstruktur (100) ein Polypropylenharz ist, der zu wenigstens 30 % mit Glas gefüllt ist.

10. Strukturzelle (40) nach Anspruch 1, wobei die Zellstruktur (100) ferner zum Tragen der Landschaftsbauprodukte (20) konfiguriert ist, während eine Platzierung von Versorgungsleitungen in wenigstens etwa 90 % ihres Volumens zugelassen wird.

11. Strukturzelle (40) nach Anspruch 4, die Folgendes umfasst:
eine Basis mit einer ersten Seite und einer zweiten Seite; wobei sich die mehreren Stützelemente (120) von der Basis erstrecken; und
wobei einige der Stützelemente (120), die sich von der ersten Seite der Basis erstrecken, eine erste Orientierung ihrer allgemeinen Vierpassgestalten haben, und einige der Stützelemente (120), die sich von der zweiten Seite der Basis erstrecken, eine zweite Orientierung ihrer allgemeinen Vierpassgestalten haben.

12. Strukturzelle (40) nach Anspruch 11, wobei:
die Basis und die mehreren Stützelemente (120) kollektiv ein erstes Volumen einnehmen;
die Basis und die mehreren Stützelemente (120) kollektiv ein zweites Volumen konturieren; und
ein Verhältnis zwischen dem zweiten Volumen und dem ersten Volumen wenigstens etwa 9:1 beträgt, um ein allgemein unbehindertes Wachstum der Baumwurzeln und eine Platzierung von Versorgungsleitungen in dem zweiten Volumen zu erleichtern.

13. Strukturzelle (40) nach Anspruch 12, wobei die erste und zweite Orientierung ferner zum Verhüten einer Verriegelung der Strukturzelle (40) mit einer anderen Strukturzelle konfiguriert ist, wenn die Strukturzelle (40) auf die andere Strukturelle gestapelt ist.

14. Strukturzelle (40) nach Anspruch 11, wobei jedes Stützelement (120) der mehreren Stützelemente (120) einstückig mit der Basis ausgebildet ist.

15. Strukturzelle (40) nach Anspruch 11, wobei jedes Stützelement (120) der mehreren Stützelemente (120) so konfiguriert ist, dass es entfernbar an der Basis befestigt wird.

16. Strukturzelle (40) nach Anspruch 11, die ferner ein Verdeck umfasst, das zum Anbringen an den mehreren Stützelementen (120) allgemein gegenüber der Basis konfiguriert ist.

17. Strukturzelle (40) nach Anspruch 16, wobei das Verdeck ferner wenigstens ein Widerstandselement umfasst, das zum Verbinden zwischen wenigstens zwei der Stützelemente (120) konfiguriert ist, wobei das Widerstandselement ferner zum Reduzieren einer Verformung der wenigstens zwei Stützelemente (120) entlang dem Widerstandselement konfiguriert ist.

18. Strukturzelle (40) nach Anspruch 1, die ferner zur Platzierung unter einem Aggregat (30) tragenden Geotextilstoff konfiguriert ist und mehrere Eindrücke (300) umfasst, die zum Aufnehmen des Geotextilstoffs und des Aggregats (30) konfiguriert sind, um das strukturelle Tragen der Landschaftsbauprodukte (20) durch die Stützelemente (120) zu erleichtern.

## Revendications

1. Cellule structurelle (40) pour supporter un aménagement (20) et permettre la pousse de racines d'arbres en dessous de l'aménagement (20), comprenant :
une structure cellulaire (100) comportant une partie inférieure (110) et une pluralité d'éléments de support (120), la structure cellulaire ayant un sens vertical généralement perpendiculaire à la partie inférieure (110) et des sens latéraux généralement dans la partie inférieure (110) ;
dans lequel les bords externes de la partie inférieure (110) et de la pluralité d'éléments de support (120) définissent un volume, la structure cellulaire étant configurée pour supporter l'aménagement (20), approximativement 90% ou plus du volume constituant un volume libre pour permettre la pousse généralement libre des racines d'arbres à travers lui ; dans laquelle la structure cellulaire (100) est empilable par-dessus une autre structure cellulaire (100) de telle sorte que les éléments de support (120) des structures cellulaires empilées (100) fournissent le support de l'aménagement (20), et de telle sorte que les structures cellulaires empilées soient sensiblement couplées dans leur sens vertical et sensiblement découplées dans leurs sens latéraux ; et
dans lequel la pluralité d'éléments de support (120) comporte en outre un premier ensemble d'éléments de support (120) ayant une première orientation d'éléments de support, et un second ensemble d'éléments de supports ayant une seconde orientation d'éléments de support qui est tournée d'approximativement 45 degrés par rapport à la première orientation d'éléments de support.

2. Cellule structurelle (40) selon la revendication 1, dans laquelle la structure cellulaire (100) est configurée pour supporter une charge d'au moins 15 psi (103kNm⁻²).

3. Cellule structurelle (40) selon la revendication 1, dans laquelle la structure cellulaire peut être orientée dans des orientations autour de son sens vertical, et dans laquelle la structure cellulaire (100) est configurée pour être empilée sur une autre des structures cellulaires (100) dans une orientation généralement opposée à l'orientation de l'autre des structures cellulaires (100).

4. Cellule structurelle (40) selon la revendication 3, dans laquelle chaque élément de support (120) de la pluralité d'éléments de support (120) a une forme en coupe transversale qui est généralement une forme quadrifoil configurée pour empêcher l'interverrouillage des structures cellulaires empilées orientées généralement en opposition (100).

5. Cellule structurelle (40) selon la revendication 1, dans laquelle chaque élément de support (120) de la pluralité d'éléments de support (120) fait partie intégrante de la partie inférieure (110).

6. Cellule structurelle (40) selon la revendication 1, dans laquelle chaque élément de support (120) de la pluralité d'éléments de support (120) est configuré pour être fixé de manière amovible à la partie inférieure (110).

7. Cellule structurelle (40) selon la revendication 1, comprenant en outre une partie supérieure configurée pour être fixée aux éléments de support (120) généralement en opposition à la partie inférieure (110).

8. Cellule structurelle (40) selon la revendication 7, dans laquelle la partie supérieure comprend en outre au moins un élément de résistance configuré pour être couplé entre au moins deux des éléments de support (120), l'élément de résistance étant configuré en outre pour réduire une déformation des au moins deux éléments de support (120) dans au moins l'un des sens latéraux.

9. Cellule structurelle (40) selon la revendication 1, dans laquelle la structure cellulaire (100) est une résine de polypropylène remplie au moins à 30% de verre.

10. Cellule structurelle (40) selon la revendication 1, dans laquelle la structure cellulaire (100) est configurée en outre pour supporter l'aménagement (20) tout en permettant l'installation de canalisations des services publics dans au moins approximativement quatre-vingt dix pour cent de son volume.

11. Cellule structurelle (40) selon la revendication 4, comprenant :
une base ayant un premier côté et un second côté ; dans laquelle la pluralité d'éléments de support (120) s'étend depuis la base ; et
dans laquelle la forme généralement quadrifoil de certains des éléments de support (120) s'étendant depuis le premier côté de la base a une première orientation, et la forme généralement quadrifoil de certains des éléments de support (120) s'étendant depuis le second côté de la base a une seconde orientation.

12. Cellule structurelle (40) selon la revendication 11, dans laquelle
la base et la pluralité d'éléments de support (120) occupent collectivement un premier volume ;
la base et la pluralité d'éléments de support (120) délimitent collectivement un second volume ; et
un rapport du second volume sur le premier volume est au moins approximativement 9:1, de manière à faciliter une pousse généralement libre des racines d'arbres et l'installation de canalisations des services publics dans le second volume.

13. Cellule structurelle (40) selon la revendication 12, dans laquelle les première et seconde orientations sont configurées en outre pour empêcher l'interverrouillage de la cellule structurelle (40) avec une autre de la cellule structurelle quand la cellule structurelle (40) est empilée sur l'autre de la cellule structurelle.

14. Cellule structurelle (40) selon la revendication 11, dans laquelle chaque élément de support (120) de la pluralité d'éléments de support (120) fait partie intégrante de la base.

15. Cellule structurelle (40) selon la revendication 11, dans laquelle chaque élément de support (120) de la pluralité d'éléments de support (120) est configuré pour être fixé de manière amovible à la base.

16. Cellule structurelle (40) selon la revendication 11, comprenant en outre une platine configurée pour être fixée à la pluralité d'éléments de support (120) généralement en opposition à la base.

17. Cellule structurelle (40) selon la revendication 16, dans laquelle la platine comprend en outre au moins un élément de résistance configuré pour être couplé entre au moins deux des éléments de support (120), l'élément de résistance étant configuré en outre pour réduire une déformation des au moins deux éléments de support (120) le long de l'élément de résistance.

18. Cellule structurelle (40) selon la revendication 1, configurée en outre pour être placée sous une membrane géotextile supportant un agrégat (30), et comprenant une pluralité de creux (300) configurés pour recevoir la membrane géotextile et l'agrégat (30), de façon à faciliter le support structurel de l'aménagement (20) par les éléments de support (120).
